# EUROPEAN PATENT SPECIFICATION

(11) **EP 1 227 922 B1**
(45) Date of publication and mention of the grant of the patent: **28.05.2003**
(21) Application number: 00974803.9
(22) Date of filing: 26.10.2000
(51) Int. Cl.: B29C 33/20

(54) **A MOLDING MACHINE FOR POLYSTYRENE ELEMENTS WITH MECHANICAL LOCKING SYSTEM OF MOLDS**
GIESSMASCHINE FÜR POLYSTYROLELEMENTE MIT MECHANISCHER VERRIEGELUNGSEINRICHTUNG FÜR FORMEN
MACHINE A MOULER DES ELEMENTS EN POLYSTYRENE DOTEE D'UN SYSTEME DE VERROUILLAGE MECANIQUE DES MOULES

(30) Priority: 28.10.1999 IT PG990061
(43) Date of publication of application: 07.08.2002
(73) Proprietor: Polimate - S.r.l., 06089 Torgiano (IT)
(72) Inventor: CALZOLARI, Sergio, I-06088 Santa Maria degli Angeli-Assisi (IT)
(74) Representative: Baldi, Claudio
(86) International application number: IT0000433
(87) International publication number: WO01032387

(56) References cited:
- GB-A- 1 601 419
- GB-A- 2 064 415
- GB-A- 2 166 684
- US-A- 3 964 852
- US-A- 5 928 684

## Description

In molding machines for polystyrene elements, the locking of the moving die half with respect to the fixed one requires very high forces due to the pressure inside the mold and to the mold dimensions.

The purpose of the present invention is to overcome the problems related to the current systems used to move and lock the two die halves.

The machines that are currently available on the market make use of different moving and locking systems, which can be grouped into three main categories: 1) mechanical toggle systems; 2) hydro-mechanical systems; 3) hydraulic piston systems.

Mechanical toggle systems comprise a series of connecting rods controlled by one or more oil-pressure cylinders. The cylinder movement causes the opening and closing of the moving die half towards the fixed one. During closing, the mold reaction force is discharged on the connecting rods and consequently on the rear frame of the machine, which therefore needs to support the mold and contrast the reaction forces. For this reason, the frame must be strong enough to withstand the force of the connecting rods of the locking system. These systems present the following disadvantages and limitations:
a) the bearing structures need to be large and very strong, with an increase in manufacturing costs and volume;
b) the stroke of the moving die half is limited and basically related to the dimensions of the closing connecting rods;
c) the presence of an oil-pressure system results in high installation and maintenance costs.

Hydro-mechanical systems operate in three different steps: fast advance of the moving die half by means of two oil-pressure cylinders; insertion of a locking plate by means of a small piston; closing of the mold by means of a high-pressure central piston with short stroke. Also these systems present a series of disadvantages and limitations:
a) the presence of an oil-pressure system results in high installation and maintenance costs.
b) the surfaces of the locking elements work in direct contact and their reciprocal sliding causes friction problems.

GB Patent No. 2166684 describes a locking device for locking the two mould halves of a plastics-moulding machine together, the locking device comprising a first locking portion fixed to one mould half, a second locking portion carried by a piston slidably mounted in a cylinder fixed to the other mould half, whereby sliding movement of the piston brings the interlocking portions into engagement, means for rotating the piston during sliding movement thereof so as to lock the engaged locking portions, the rotating means comprising a projection engaging a curved path.

Hydraulic piston systems comprise one or more pistons with rod connected to the moving die half. Moving and closing are obtained by inserting pressurized oil inside the cylinders, so that they remain locked during the molding process. Also these systems present a series of disadvantages and limitations:
a) the piston dimensions are correlated to the force due to the mold dimensions and molding pressure;
b) the opening and closing cycle of the molds is very slow: at the same power, the larger the pistons the lower the speed;
c) the bearing structures need to be large and very strong, with an increase in manufacturing costs and volume;
d) the presence of a powerful oil-pressure system results in high installation and maintenance costs. Moreover, these systems are extremely dangerous because of possible pipes bursting, as well as polluting.

The purpose of the present invention is a molding machine for expanded polystyrene objects provided with a mechanical locking system of the moving die half with respect to the fixed one, characterized by a high ratio between locking and controlling force.

The main advantages of the invention are:
a) the actuators operating the mechanical blocking of the moving die half with respect to the fixed one are of irreversible mechanical type, providing for high locking forces with modest controlling forces;
b) the complete elimination of the oil-pressure installation, with a considerable reduction in industrial and operating costs;
c) the realization of machines with reduced dimensions compared to the existing machines, with a reduction in manufacturing costs and volume;
d) the realization of mechanical blocking by means of surface advance, thus eliminating sliding and friction between surfaces completely;
e) the possibility of creating wide openings between the two die halves according to the dimensions of the molded pieces, while maintaining the locking system unchanged.

The text continues with a detailed description of the operating principle of the present invention.

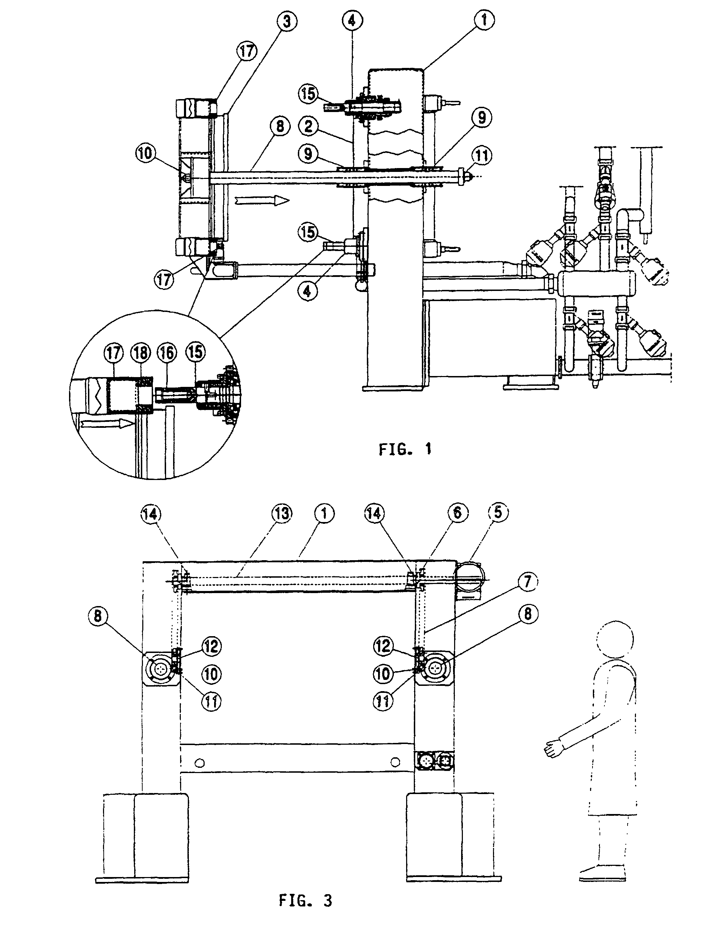

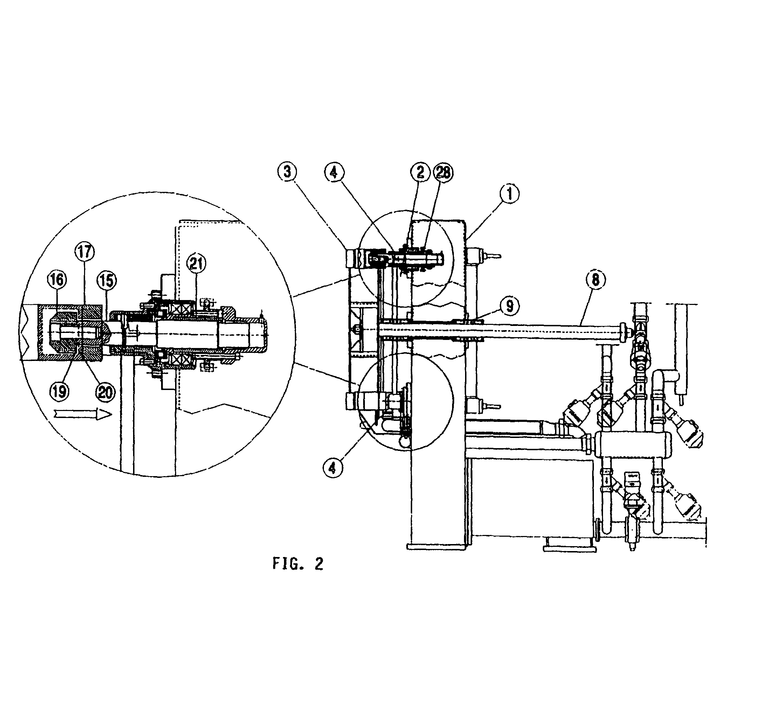

The technical characteristics of the invention, according to the aforementioned purposes, are clearly illustrated in the claims below. The advantages of the invention will become evident from the detailed description, with reference to drawings as per Figs. 1 to 6.

Figure 1 is a schematic lateral view of the machine provided with the locking system according to the present invention, with the two die halves open.

Figure 2 shows the same machine as Fig. 1 with the two die halves closed by means of the locking system according to the present invention.

Figure 3 is a front view of the machine showing the kinematic motion and synchronization of the system used to advance the moving die half to the fixed die half.

Figure 4 is a longitudinal cross-section of the mechanical locking system in a typical section.

Figure 5 is a front view of the machine showing the kinematic motion and synchronization mechanism of the locking system.

Figure 6 is the same as Fig. 1, in which one side of the bearing frame has been partially removed to show the location, trajectory and drive of the chain used to open and closed the two die halves.

The solution illustrated in the aforementioned figures is to be considered as a schematic representation of a purely illustrative, non-restrictive solution. The possibility of using the invention in other fields of application is not ruled out.

Basically, the machine is composed of a frame or base (1), which represents its bearing structure, and two die halves, one fixed (2) and one moving (3).

The union of the two die halves (2, 3) generates the molding chamber for the polystyrene elements and is obtained by moving the moving die half (3) towards the fixed die half (2) along a generally horizontal direction. On its four comers, the frame supporting the fixed die half (2) is provided with a mechanical actuator (4) that locks the moving die half (3) against the fixed one (2) by means of rotation and translation.

The closing of the die halves includes two different steps: first, the moving die half (3) advances towards the fixed die half (2) until they touch and then the die halves are locked.

The fixed die half (2) is joined to the frame (1), while the moving die half (3) is connected to two lateral cylindrical bars (8) acting as support and slide guide.

The bars (8) joined to the moving die half (3) axially slide within a pair of ball bearings (9) fixed to the frame (1).

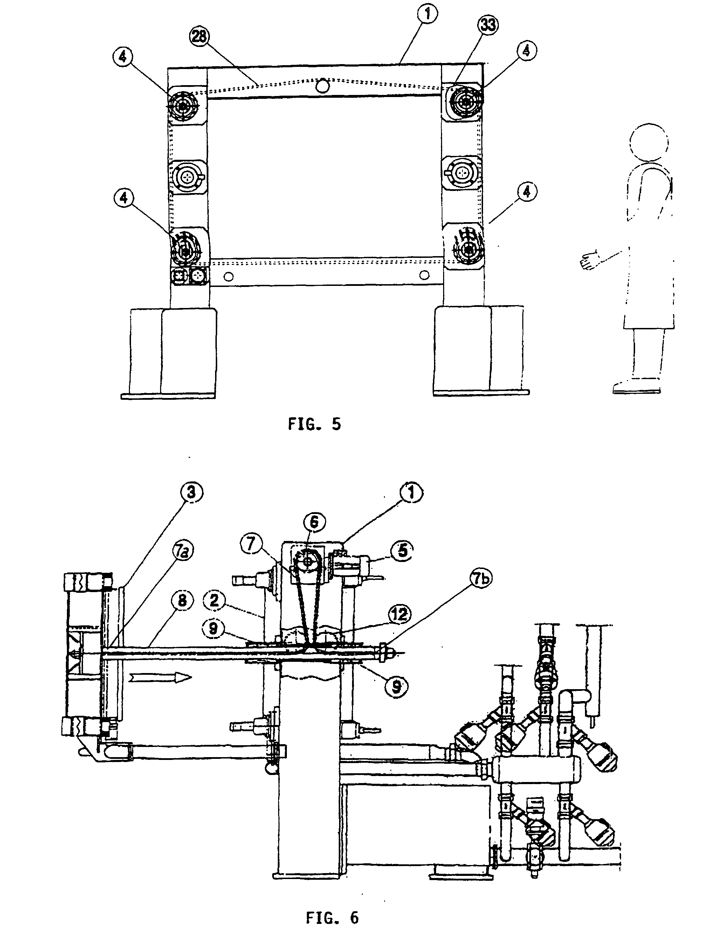

The moving die half (3) advances by means of a kinematic motion controlled by a geared motor (5), joined to the frame (1), whose shaft is provided with a pinion (6) that engages with the chain (7), as shown in Fig. 6.

More precisely, the moving die half (3), together with the sliding pair of horizontal support and guide bars (8), is driven in alternate strokes by means of two chains (7) located on the two sides of the bearing frame (1) laying on vertical planes parallel to the longitudinal axis of the machine.

The front end (7a) of each chain (7) is fixed on the side of the moving die half (3), while the rear end (7b) is fixed to the end of the guide bar (8). The intermediate section is engaged with a drive pinion (6) mounted on top of the frame (1), towards which the chain (7) is deviated by means of two neutral return reels (12), one after and one before the pinion (6); it being provided that the two drive pinions (6) of the chains (7) are shafted in a torsion bar (13) transversally mounted on the top of the bearing frame (1) and driven in alternative rotation by means of a geared motor (5).

From the complete opening position, the moving die half (3) advances to touch the fixed die half (2). At the end of this stage, the lock seats (17) of the moving die half (3) are placed in front of the lock keys (16). The movement of the moving die half (3) allows for the introduction of the lock keys (16) with rectangular shape and rounded ends into the slots (18) of the moving die half (3).

The slot (18) has a rectangular shape, similar to the lock key (16) and suitable dimensions in order to allow for introducing the lock key (16) only in the same position as the slot (18).

Once the advance has been completed, locking begins.

Further to 90° rotation around its axis, the lock key (16) places itself with orthogonal axis to the slot (18). Now the shaft (15) of the actuator slides until the face (19) of the lock element comes in contact with the internal face (20) of the slot (18).

The lock force between the two die halves is exerted by the acme thread screw (21) of the actuator.

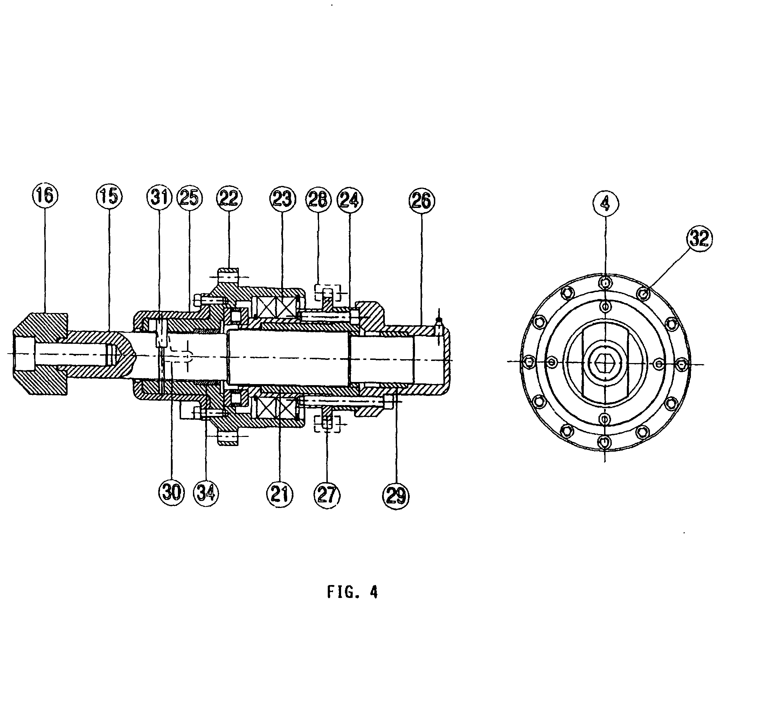

With particular reference to Figs. 4 and 5, the text continues with a detailed description of the operating principle of the actuator (4) and its kinematic motion.

The actuator (4) is completely mechanical and composed of a body (22) housing a pair of bearings (23), the female screw (24) and the screw (21) located on the shaft (15). The body (22) is connected to the front (25) and rear cap (26) with structural and protective function. The toothed crown (27) driven in rotation with the closed chain (28) is flanged on the external part of the female screw (24). The actuator internally houses seal rings and spacers to guarantee the mechanism operation.

Peripherally the body (22) features a crown of holes (32) used to flange the actuator (4) to the machine frame.

By means of the chain (7) the toothed crown (27) is driven into rotation, together with the female screw (24) supported by the pair of bearings (23).

The female screw (24) moves the shaft (15) by means of the screw (21) located on the central part of the shaft (15). The shaft (15) is supported by the sliding bearings (34) and (29) that allow for translation and rotation. The pin (31) joined to the shaft (15) engages with the cam (30) inside the body (22).

The profile of the cam (30) is such that the shaft (15) is first driven into a combined 90° rotation and translation movement and then into axial translation.

Because of these movements, the lock key (16) joined to the shaft (15) allows for locking the moving die half against the fixed one, as describe above.

The kinematic motion is irreversible and allows for the realization of high locking forces with small controlling forces.

The profile of the cam (30) determines the motion law of the shaft (15) and consequently of the lock key (16).

The motion of the four lock actuators (4) is obtained by means of a geared motor (33) located in the top part of the machine. The geared motor (33) drives the female screw of one of the four actuators into rotation by means of a suitable coupling. Therefore, the actuator connected to the geared motor (33) becomes the motor element of the transmission.

The other actuators receive motion by means of the closed chain (28). The closed chain (28) operates as synchronizer for the motion, since it simultaneously acts on all the screw actuators by means of suitable circuits for simultaneous locking. Once the two die halves have been locked, the polystyrene granules can be injected inside the chamber until they fill it.

The injection of steam inside the mold generates sintering or microcasting between the material granules. Microcasting reciprocally binds the granules until an object having the shape and size of the chamber generated by the two die halves is obtained.

After the necessary cooling time, during which vaporized water is injected in the molding area and then vacuum-extracted, the locking system operates an inverse cycle with respect to the cycle illustrated above in order to free the moving die half.

Therefore, unlocking is obtained by inverting the rotation direction of the female screw (24), which first moves the surface (19) of the lock key (16) away from the surface (20) of the lock seat (17). Then, the profile of the cam (30) generates the 90° rotation of the shaft (15) in order to place the key (16) in the same position as the slot in order to go through it. The two die halves are unlocked and the moving die half can be moved away in order to eject the molded object.

The cycle illustrated above can be operated in a cyclic mode.

By means of a control board, the operator carries out the management and control operations of the machine.

The machine is electronically managed through programmable logic controllers (PLC) capable of transmitting commands to the actuators and receiving information from control sensors.

As regards the machine control, all the state-of-the-art systems can be applied and are to be considered as technically equivalent, with no limitation for the object of the present invention.

The locking system of the die halves obtained by means of the mechanical actuator (4) is a functional application that can be used in a wide range of machines in which two parts with relative motion are locked. This description represents an applicative, non-limitative example.

The solutions described herein are merely illustrative and are to be considered as technically equivalent solutions that guarantee the maintenance of the operating principles as illustrated above.

## Claims

1. A molding machine for polystyrene elements with mechanical locking systems of molds, of the type comprising a bearing frame (1) on which a fixed die half (2) is centrally fixed, which cooperates with an identical moving die half (3) capable of alternatively sliding along a generally horizontal direction, wherein the aforementioned moving die half (3) is peripherally provided with special seats (17) which cooperate with lock keys (16) mounted at the end of actuators (4) fixed on the frame (1) perimetrally to the fixed die half (2), wherein each seat (17) of the moving die half (3) has a slot (18) ending in a rear compartment with higher height and wherein said slot (18) is capable of allowing for the exact insertion of the lock key (16) of the actuator (4) in horizontal position and the rear compartment is capable of allowing for the exact insertion and rotation of the lock key (16) up to vertical position, each lock key (16) being mounted at the end of a shaft (15) housed inside a body (22) with horizontal axis; machine **characterized by** the fact that the shaft (15) supports, together with bearings (23), a female screw (24) engaged with a section shaped as acme thread screw (21) of the shaft (15) and joined to an external toothed crown (27) driven into alternative rotation by means of a closed circuit chain (28) driven by a geared motor (33) fixed to the bearing frame (1) and simultaneously engaged with the toothed crowns (27) of the other actuators (4) mounted on the bearing frame (1), it being also provided that the shaft (15) of each actuator (4) is joined with a pin (31) engaged with a cam (30) located inside the body (22) and provided with such a profile that, said shaft (15), driven into rotation by the dosed circuit chain (28) engaged with the toothed crown (27), moves in 90° rotation and axial translation and vice versa.

2. A machine according to claim 1, **characterized by** the fact that the moving die half (3) is supported by a pair of horizontal bars (8) capable of axially sliding in two directions inside ball bearings (9) fixed to the bearing frame (1) on the sides of the fixed die half (2); it being also provided that the alternate strokes of the moving die half (3) are obtained by means of two dragging chains (7) of the moving die half (3) located on the two sides of the bearing frame (2) and laying on vertical planes parallel to the longitudinal axis of the machine; it also being provided that the front end (7a) of each dragging chain (7) of the moving die half (3) is fixed on the side of the moving die half (3), while the rear end (7b) is fixed to the end of the guide bar (8), while the intermediate section is engaged with a driving pinion (6) mounted on top of the frame (1), towards which the dragging chain (7) of the moving die half (3) is deviated by means of two neutral return reels (12), one after and one before the pinion (6); it being provided that the two driving pinions (6) of the dragging chains (7) of the moving die half (3) are shafted in a torsion bar (13) transversally mounted on the top of the bearing frame (1) and driven in alternative rotation by means of a geared motor reducer (5).

## Patentansprüche

1. Eine Formpresse für Polystyrol-Elemente mit mechanischem Verschlusssystem von Formen; umfasst: Stützgestell (1), auf dem eine befestigte Formhälfte (2) zentral befestigt ist; diese wirkt mit einer identischen beweglichen Formhälfte (3) zusammen, die in einer horizontalen Richtung hin- und hergleitet. Die bewegliche Formhälfte (3) ist peripher mit Spezialauflagern (17) ausgestattet, welche mit Blockierschlüsseln (16) zusammenwirken, die an Antriebensenden (4) montiert sind, die peripher zur befestigten Formhälfte (2) auf dem Gestell (1) befestigt sind. Jedes Auflager (17) der beweglichen Formhälfte (3) besitzt eine Nut (18), die in einen höher gelegenen hinteren Bereich ausläuft. Die Nut (18) ermöglicht die exakte Positionierung des Blockierschlüssels (16) des Antriebs (4) in der horizontalen Richtung, und der hintere Bereich ermöglicht die exakte Positionierung und Rotation des Blockierschlüssels (16) in der vertikalen Richtung. Jeder Blockierschlüssel (16) ist an einem Schaftende (15) montiert; der Schaft befindet sich in einem Körper (22) mit horizontaler Achse. Die Maschine zeichnet sich dadurch aus, dass der Schaft (15) zusammen mit Halterungen (23) eine Schraubenmutter (24) stützt, welche mit einer trapezgewindeförmigen Sektion (21) auf dem Schaft (15) befestigt und mit einer externen Zahnkrone (27) verbunden ist, die durch eine geschlossene Kreiskette (28) in eine alternative Rotation gebracht wird; die Kreiskette wird von einem Getriebemotor (33) angetrieben, der auf dem Stützgestell (1) befestigt ist und gleichzeitig mit den Zahnkronen (27) der anderen auf dem Stützgestell (1) montierten Antriebe (4) verbunden ist. Außerdem ist der Schaft (15) jedes einzelnen Antriebs (4) mit einem Zapfen (31) verbunden, welcher seinerseits mit einem Nocken (3) verbunden ist, der im Körper (22) sitzt und solch ein Profil hat, dass dieser Schaft (15), der durch den geschlossenen Kettenkreis (28) angetrieben und mit den Zahnkornen (27) verbunden ist, in eine 90°-Rotation und axiale Übersetzung und umgekehrt gebracht wird.

2. Eine Maschine gemäß Antrag 1, die sich dadurch auszeichnet, dass die bewegliche Formhälfte (3) von einem Paar horizontaler Stangen (8) getragen wird. Diese können axial in zwei Richtungen gleiten, und zwar in Kugellagern (9), die auf dem Stützgestell (1) an den Seiten der befestigten Formhälfte (2) befestigt sind. Außerdem werden die alternativen Hübe der beweglichen Formhälfte (3) durch zwei Hemmketten (7) der beweglichen Formhälfte (3) erreicht, welche sich an den beiden Seiten des Stützgestells (2) befinden und auf vertikalen Ebenen parallel zur Längsachse der Maschine liegen. Das vordere Ende (7a) jeder Hemmkette (7) der beweglichen Formhälfte (3) ist an der Seite der beweglichen Formhälfte (3) befestigt, während das hintere Ende (7b) am Ende der Führungsstange (8) befestigt ist und die Zwischensektion mit einem Antriebsritzel (6) oben auf dem Gestell (1) montiert ist, wohin die Hemmkette (7) der beweglichen Formhälfte (3) anhand von zwei neutralen Rückführspulen (12) getrieben wird. Eine Rückführspule befindet sich vor und die andere hinter dem Ritzel (6). Die beiden Antriebsritzel (6) der Hemmketten (7) der beweglichen Pormhälfte (3) sind in eine Drehstange (13) gebohrt, die transversal oben auf dem Stützgestell (1) montiert ist und durch einen Getriebemotor-Reduktor (5) alternativ zum Rotieren gebracht wird.

## Revendications

1. Une machine à mouler destinée à des éléments en polystyrène avec des systèmes de fermeture mécanique de moules, du genre comprenant une carcasse de coussinet (1) sur laquelle est centralement fixé un demi-moule fixe (2) qui est solidaire avec un demi-moule libre (3) similaire, capable de glisser de manière alternative dans une direction généralement horizontale. Ce demi-moule libre (3) est muni sur sa périphérie de sièges spéciaux (17) qui sont solidaires avec des clés de fermetures (16) montées à la fin des actionneurs (4) fixés sur la carcasse (17) tout le long du demi-moule fixe (2) où chaque siège (17) du demi-moule libre (3) a une ouverture (18) aboutissant à un compartiment arrière de grandes dimensions; cette ouverture (18) est capable de permettre de positionner exactement la clé de fermeture (16) de l'actionneur (4) sur une position horizontale, et le compartiment arrière est capable de permettre l'insertion exacte et la rotation de la clé de fermeture (16) jusqu'à une position verticale, chaque clé de fermeture (16) étant montée à la fin d'une tige (15) logée dans un corps (22) avec un axe horizontal; cette machine est **caractérisée par le fait que** la tige (15) supporte, avec des coussinets (23), une vis femelle (23) engagée dans une section taillée comme une vis filetée (21) de la tige (15) et assemblée à une couronne dentée externe (27) commandée dans une rotation alternative au moyen d'une chaîne à circuit fermé (28) commandée à son tour par un moteur à dents (33) fixé à la carcasse de coussinet (1) et en même temps solidaire avec les couronnes dentées (27) des autres actionneurs (4) montés sur la carcasse de coussinet (1); elle est aussi fournie de sorte que la tige (15) de chaque actionneur (4) soit réunie par une broche (31) solidaire avec une came (30) placée dans le corps (22) et de sorte que cette tige (15), commandée en rotation par la chaîne à circuit fermé (9) solidaire avec la couronne dentée (27), bouge selon une rotation de 90° et une translation axiale, et inversement.

2. Une machine conformément au produit 1, **caractérisée par le fait que** le demi-moule libre (3) est supporté par un couple de barres horizontales (8) capables de se déplacer de manière axiale dans deux directions sur le roulement à bille (9) fixé à la carcasse de coussinet (1) sur les côtés du demi-moule fixe (2); elle est également munie de sorte que les courses alternées du demi-moule libre (3) soient obtenues à l'aide de deux chaînes de traînage (7) du demi-moule libre (3) situées sur les deux côtés de la carcasse de coussinet (2) et reposant sur deux plans verticaux parallèles à l'axe longitudinal de la machine; elle est également munie de sorte que le frontal (7a) de chaque chaîne de traînage (7) du demi-moule libre (3) soit fixé à la fin de la barre de guidage (8) alors que la section intermédiaire est solidaire avec une roue dentée motrice (8) montée au sommet de la carcasse (1) grâce à laquelle la chaîne de traînage (7) du demi-moule libre (3) est déviée à l'aide de deux bobines de retour neutres (12), une avant: et une après la roue (6); elle est aussi fournie de sorte que les deux roues dentées motrices (6) des chaînes de traînage (7) du demi-moule libre (3) soient accouplées à une tige de torsion (13) montée transversalement au sommet de la carcasse de coussinet (1) et commandée dans une rotation alternative au moyen de deux moto-réducteurs dentés (5).
